(19) Europäisches Patentamt / European Patent Office / Office européen des brevets

(11) **EP 2 363 950 B1**

(12) **FASCICULE DE BREVET EUROPEEN**

(45) Date de publication et mention
de la délivrance du brevet:
**03.04.2013 Bulletin 2013/14**

(51) Int Cl.:
***H02P 8/36*** *(2006.01)*   ***H02P 8/34*** *(2006.01)*
***H02P 8/32*** *(2006.01)*

(21) Numéro de dépôt: **11154259.3**

(22) Date de dépôt: **11.02.2011**

(54) **Systeme d'actionnement avec moteur pas à pas**

Betätigungssystem mit Schrittschaltmotor

Actuator system with stepping motor

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.02.2010 EP 10153946**

(43) Date de publication de la demande:
**07.09.2011 Bulletin 2011/36**

(73) Titulaire: **Société Industrielle de Sonceboz S.A.
2605 Sonceboz (CH)**

(72) Inventeurs:
• **Bilat, Stéphane
2300, La Chaux-de-Fonds (CH)**
• **Gerber, Georges
CH-2720, Tramelan (CH)**

(74) Mandataire: **reuteler & cie SA
Chemin de la Vuarpillière 29
1260 Nyon (CH)**

(56) Documents cités:
EP-A1- 1 760 875       US-A- 5 262 708
US-A1- 2009 153 093    US-B1- 6 262 554

EP 2 363 950 B1

**Description**

La présente invention concerne un système d'actionnement comprenant un moteur pas à pas, couplé à un système actionné, comportant un organe à commander avec un retour élastique.

Des systèmes d'actionnement comprenant un moteur pas à pas sont utilisés dans de nombreuses applications pour actionner des organes à commander. Une de ces applications est la commande d'une vanne hydraulique, le moteur pas à pas étant couplé à un piston de la vanne. Le déplacement du piston commande l'ouverture, et respectivement la fermeture, de la vanne. Afin d'atteindre une précision requise du système d'actionnement, l'accouplement entre le moteur pas à pas et l'organe à commander doit avoir un jeu bien défini, ce qui nécessite une précision élevée de fabrication et d'assemblage du système. Les coûts de fabrication sont augmentés en conséquence. Des problèmes surviennent également lors de l'utilisation du système, dus à l'usure, aux effets thermiques et au vieillissement des composants qui réduisent la précision et la fiabilité du système d'actionnement.

Il y a un désir continu de réaliser des systèmes plus fiables et économes.

Un but de l'invention est de fournir un système d'actionnement fiable, économique, et précis, notamment qui permet un positionnement précis d'un organe à commander.

Il est avantageux de réaliser un système d'actionnement qui reste précis durant toute sa durée de vie, malgré l'usure de ses éléments et les effets thermiques.

Il est avantageux de réaliser un système d'actionnement qui permet une réduction des coûts de fabrication et de l'assemblage de ses parties.

Il est avantageux de réaliser un système d'actionnement qui est précis et fiable sur une grande plage de température d'utilisation.

Il est avantageux d'optimiser la qualité lors de la fabrication des systèmes d'actionnement, notamment pour diminuer les défauts lors d'une fabrication en grande série, en permettant des tolérances de fabrication plus larges.

Il est avantageux de réaliser un système d'actionnement de vannes hydrauliques fiable, économique, et précis, permettant notamment un positionnement précis d'un piston de vanne.

Des buts de l'invention sont réalisés par un système d'actionnement selon la revendication 11.

Dans la présente invention, un système d'actionnement comprend un système de commande, un actionneur comprenant une partie d'entraînement et un moteur pas à pas comportant un rotor et un stator avec au moins une phase électrique, un système actionné comprenant un organe à commander couplé à la partie d'entraînement, et une partie élastique pouvant générer une force de retour élastique sur le rotor du moteur ou sur la partie d'entraînement. Le système de commande comprend des moyens pour mesurer un paramètre électrique induit (tel que la tension, le courant, la puissance) sur ladite au moins une phase du stator après coupure du courant de ladite au moins une phase du stator afin de détecter un retour du rotor résultant de la force de retour élastique lorsqu'un jeu mécanique est rattrapé.

Le système de commande est configuré pour le pilotage du système d'actionnement et comprend un circuit électronique pour l'acquisition du signal induit du moteur pas à pas. Le système de commande utilise un procédé pour la détection du jeu du système d'actionnement, appelé la zone morte, par la mesure du signal induit quand le moteur pas à pas recule sous l'effet de la force de retour élastique.

Le système de commande peut comprendre un microcontrôleur, un circuit d'alimentation de chaque phase de moteur pas à pas, et un circuit d'acquisition du paramètre électrique induit.

Le circuit d'acquisition peut avantageusement comprendre un amplificateur différentiel connecté aux bornes de chaque phase, et des diodes de protection de surtension protégeant les entrées de l'amplificateur différentiel contre les surtensions venant d'un circuit d'alimentation des phases de moteur pas à pas lors du pilotage du moteur pas à pas.

Le circuit d'acquisition peut avoir un ensemble de résistances permettant de définir un gain de la tension induite sur au moins une phase, et un décalage du point 0 pour pouvoir effectuer une mesure dans une seule polarité quelle que soit la polarité de la tension induite.

Dans une forme d'exécution, le système d'actionnement est une commande hydraulique, le système actionné étant un dispositif de vanne hydraulique et l'organe à commander un piston de vanne.

La partie d'entraînement peut, selon l'application, comporter un réducteur, et, aussi selon l'application, un transformateur de mouvement, par exemple de mouvement rotatif en mouvement linéaire.

Des buts de l'invention sont aussi réalisés par un procédé de commande d'un système d'actionnement pour la détection du jeu mécanique selon la revendication 1.

Dans la présente invention, un procédé de commande d'un système d'actionnement incluant un système de commande, un actionneur comprenant une partie d'entraînement et un moteur pas à pas comportant un rotor et un stator avec au moins une phase électrique, un système actionné comprenant un organe à commander couplé à la partie d'entraînement, et une partie élastique générant une force de retour élastique sur le rotor du moteur ou sur la partie d'entraînement, comprend les étapes de : (a) déplacement du rotor d'une amplitude prédéterminée $x_i$ dans un sens visant un déplacement de l'organe à commander, (b) coupure du courant de ladite au moins une phase du stator, et (c) mesure d'un paramètre électrique induit sur ladite au moins une phase du stator générée.

Lorsque la valeur du paramètre électrique signale que le rotor n'a effectué aucun retour ou un retour inférieur à un seuil prédéterminé ou mesurable, l'on peut optionnellement effectuer un étape (d) de déplacement du rotor d'une amplitude $y_i$ dans un sens opposé au sens visant un déplacement de l'organe à commander, où $x_i > y_i$. Dans le cadre de l'invention, il est aussi possible d'avancer le rotor par étapes, sans effectuer de mouvement de retour entre étapes.

On répète les étapes (a), (b), (c) et le cas échéant (d) jusqu'à la détection d'un paramètre électrique induit correspondant à un retour du rotor résultant de la force de retour élastique lorsque le jeu mécanique est rattrapé.

Dans une forme d'exécution, le stator a au moins deux phases électriques et la mesure du paramètre électrique induit peut avantageusement comprendre une mesure différentielle du paramètre électrique entre lesdites au moins deux phases. Cela permet de déterminer, entre autres, l'angle de rotation de retour du rotor, pour une détermination du jeu très précis.

Dans une autre variante, la mesure du paramètre électrique induit peut comprendre une mesure du paramètre électrique induit de ladite au moins une phase par rapport à un paramètre de référence, tel que la masse.

Le paramètre électrique induit mesuré peut avantageusement être ou comprendre une tension induite.

L'amplitude $y_i$ de déplacement du rotor dans le sens opposé doit être plus petit que l'amplitude $x_i$ de déplacement du rotor dans le sens visant un déplacement de l'organe à commander, de préférence entre 10 et 90%.

L'amplitude $x_i$ de déplacement du rotor dans le sens visant un déplacement de l'organe à commander peut avoir une valeur comprise entre un dixième de pas (1/10 pas) et deux pas et demi (2½ pas) du moteur pas à pas, de préférence une valeur comprise entre un quart de pas (¼ pas) et deux pas (2 pas) ou encore entre un pas et sept quarts de pas du moteur pas à pas.

D'autres buts et aspects avantageux de l'invention ressortiront des revendications, de la description détaillée ci-après, et des dessins annexés, dans lesquels :

la Figure 1 illustre un système d'actionnement d'une vanne hydraulique selon une forme d'exécution de l'invention.

les Figures 2a et 2b sont des graphiques illustrant des étapes d'un procédé de détection de la zone morte d'un système d'actionnement selon des formes d'exécution de l'invention;

la Figure 3 est un schéma illustrant un circuit d'une unité de commande du système d'actionnement, selon une forme d'exécution de l'invention;

la Figure 4 est un schéma illustrant un circuit d'une unité de commande du système d'actionnement, selon une autre forme d'exécution de l'invention;

la Figure 5 est un schéma illustrant un circuit d'une unité de commande du système d'actionnement, selon encore une autre forme d'exécution de l'invention;

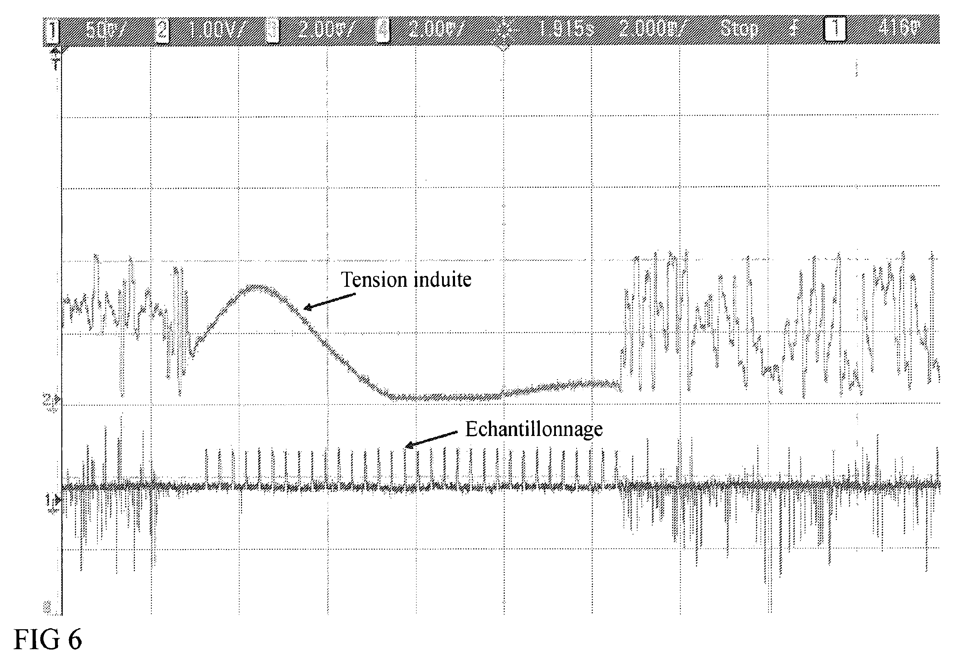

la Figure 6 est une vue de l'écran d'un appareil de mesure illustrant un exemple d'échantillonnage de la tension induite sur une phase d'un moteur pas à pas du système d'actionnement selon une forme d'exécution de l'invention.;

la Figure 7 illustre les vecteurs de tensions induites d'un moteur pas à pas à deux phases ainsi que l'angle électrique formé par les vecteurs de celles-ci selon une forme d'exécution de l'invention.

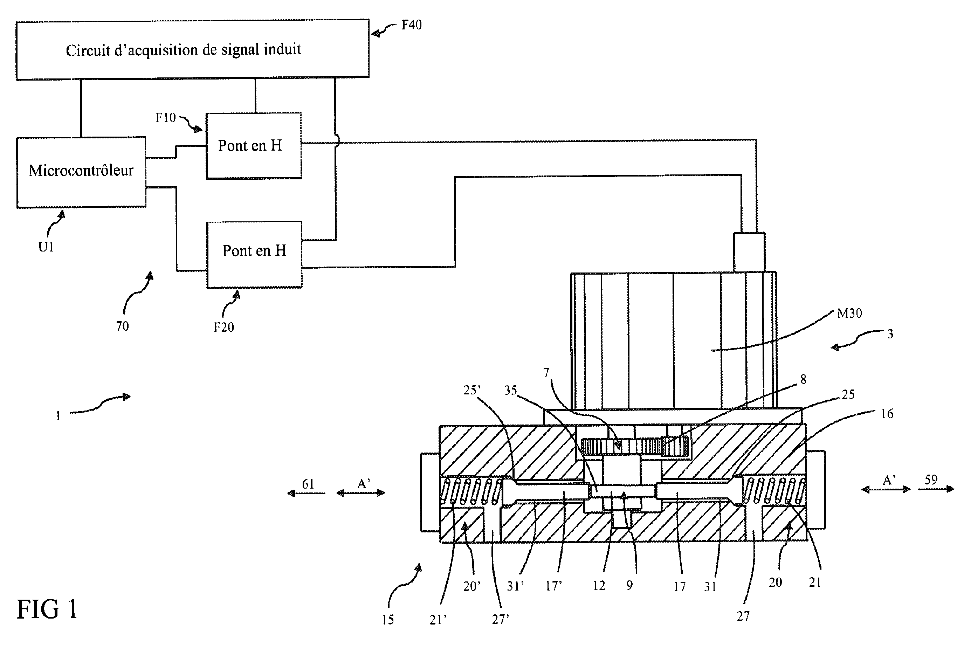

Faisant référence aux figures, notamment les Figures 1, 2a, 2b et 3, un système d'actionnement 1 selon une forme d'exécution de l'invention, comprend un actionneur 3 avec ou connecté à un système de commande 70, couplé à un système actionné 15 comprenant un organe à commander 17, 17' sur lequel agit une force de retour élastique. L'actionneur 3 comprend un moteur pas à pas M30 et une partie d'entraînement 7 entraînée par le rotor du moteur et couplée à l'organe à déplacer 17, 17' du système actionné 15. La partie d'entraînement peut, selon l'application, comporter un réducteur 8, et, aussi selon l'application, un transformateur de mouvement 9, par exemple de mouvement rotatif en mouvement linéaire.

Dans la forme d'exécution illustrée, le système d'actionnement est une commande hydraulique, le système actionné étant un dispositif de vanne hydraulique 15 dont l'organe à commander est un ou plusieurs pistons 17, 17' montés dans un bloc hydraulique 16, et la partie d'entraînement comprend un transformateur de mouvement sous forme d'une came 12 déplaçant les pistons 17, 17'. Dans l'exemple illustré, la vanne hydraulique comprend deux parties de vannes 20, 20' disposées de part et d'autre de la partie d'entraînement 7, chaque partie de vanne comprenant un piston 17, 17', un élément élastique 21, un siège de piston 25, une chambre en entrée 27, une chambre en sortie 31. Le réducteur 8 permet d'augmenter la précision du contrôle de l'ouverture de la vanne hydraulique 15 en fonction de la valeur du rapport de réduction du réducteur.

Le système de commande 70 est configuré pour le pilotage du système d'actionnement et comprend un circuit électronique pour la détection du jeu du système d'actionnement. Dans la forme d'exécution illustrée, le système de commande comprend un microcontrôleur U1, un ou plusieurs circuits d'alimentation de phases de moteur pas à pas F10, F20, et un circuit d'acquisition F40 de signal induit. Le signal induit est un paramètre électrique, tel que le courant, la tension, le déphasage entre courant et tension, la puissance.

Quand la vanne hydraulique 20, 20' est fermée, l'élément élastique 21,21', par exemple un ressort hélicoïdal, pousse le piston 17, 17' contre le siège de piston 25, 25', créant ainsi un scellement hydraulique entre la chambre d'entrée 27, 27' et la chambre de sortie 31, 31'. Quand la vanne hydraulique est en position fermée, il existe un jeu mécanique entre le piston 17, 17' et la came 12. Partant de la position fermée, quand la came tourne dans un premier sens de rotation (que nous appellerons ici arbitrairement le sens « positif ») pour un déplacement du piston 17, la came rattrape d'abord le jeu mécanique, et ensuite la came pousse sur le piston 17 et le piston effectue un mouvement positif 59 dans la direction de son axe principal A, ouvrant ainsi un espace entre le piston 17 et le siège de piston 25. L'ouverture de la vanne hydraulique 20 permet une communication entre la chambre en entrée 27 et la chambre en sortie 31. Partant de la position fermée, quand la came tourne dans un deuxième sens opposé au premier sens de rotation (que appellerons ici arbitrairement le sens « négatif »), pour un déplacement du piston 17', la came rattrape d'abord le jeu mécanique, et ensuite la came pousse sur le piston 17' et le piston effectue un mouvement négatif 61 dans la direction de son axe principal A', ouvrant ainsi un espace entre le piston 17' et le siège de piston 25'. L'ouverture de la vanne hydraulique 20' permet une communication entre la chambre en entrée 27' et la chambre en sortie 31'.

Afin de garantir une fermeture complète de la vanne hydraulique, un certain jeu mécanique entre le piston et la came peut être prévu quand la vanne hydraulique est en position fermée. Un jeu peut aussi être le résultat de jeux mécaniques entre composants dans la chaîne d'entraînement entre le rotor de l'actionneur et l'organe à déplacer, ces jeux dépendent entre autres de la précision de fabrication des composants et les besoins d'assemblage des composants. Le jeu mécanique dans la chaîne d'entraînement peut aussi varier en fonction des effets thermiques (température de fonctionnement) et de l'usure et du vieillissement des composants. Ces jeux influencent la précision du système d'actionnement, et notamment la précision de positionnement de l'organe à déplacer. La nécessité d'assurer une certaine précision augmente les coûts de fabrication des composants et les coûts d'assemblage. Par ailleurs, la perte de précision due à l'usure ou la variation de précision en fonction des effets thermiques peuvent réduire la durée de vie du système d'actionnement ou le rendre moins fiable. La présente invention vise à éliminer ou à réduire les effets de ces jeux dans la chaîne d'entraînement afin de rendre le système d'actionnement plus fiable, performant et économique ou pour diminuer les défauts lors d'une fabrication en grande série. Dans certains systèmes d'actionnement, on cherche soit à éliminer le jeu dans la chaîne d'entraînement, soit à maîtriser un jeu bien défini. Le jeu dans une chaîne d'entraînement est surtout perçu lorsqu'il y a un changement de direction ou lorsque l'on déplace l'organe à déplacer d'une position d'arrêt ou de repos vers une autre position. Ce jeu est parfois appelé « zone morte ».

Dans la forme d'exécution illustrée, la vanne hydraulique est de type proportionnelle, et un pilotage précis du déplacement du piston est avantageux pour assurer un fonctionnement précis du système d'actionnement.

Dans la forme d'exécution illustrée, le jeu mécanique entre la came 12 et la surface de came 35 des pistons 17, 17', résulte d'une part des tolérances de fabrication et d'assemblage du système d'actionnement, d'autre part d'un jeu défini voulu pour assurer que les pistons 17, 17' soient en butées contre les sièges 25, 25' quand la vanne hydraulique est en position fermée.

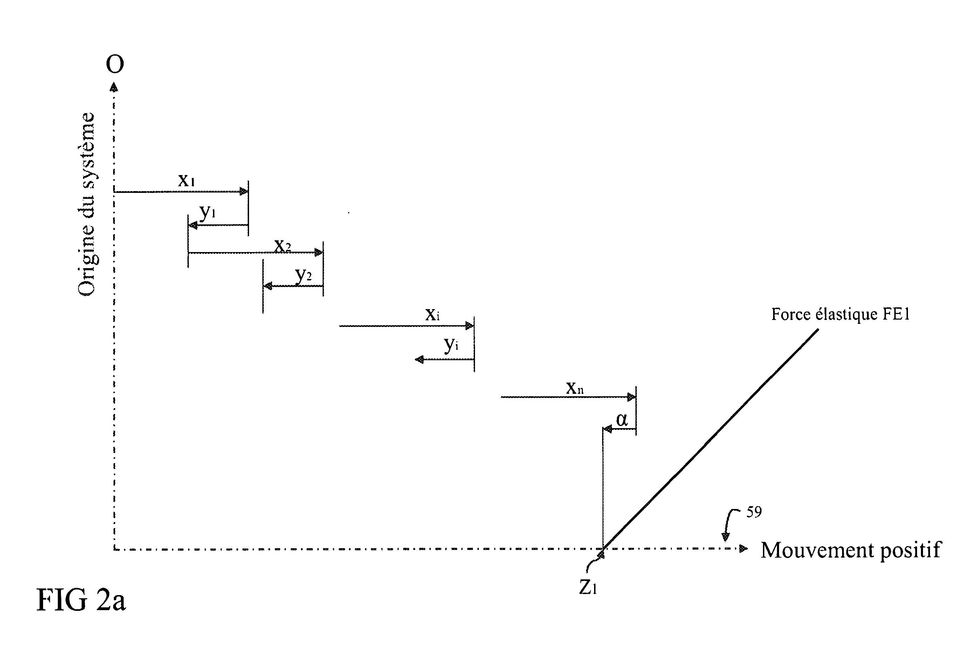

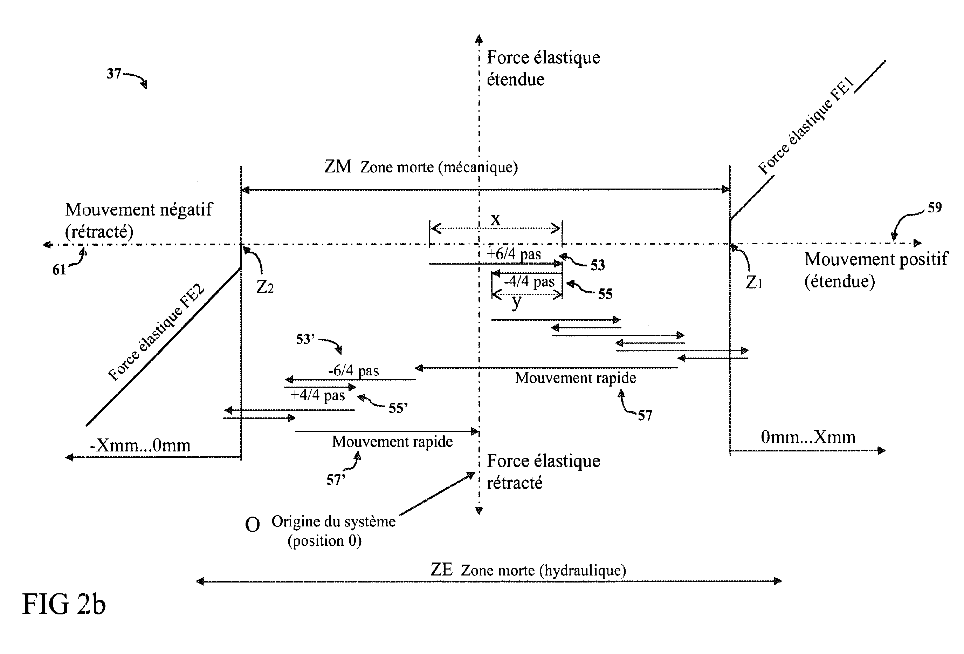

Faisant référence aux Figures 1, 2a et 2b, selon une forme d'exécution avec un système actionné comportant un seul organe à commander, le procédé de détection de zone morte démarre avec le système de commande pilotant le moteur pas à pas M30 pour effectuer une rotation d'amplitude $x_1$ pour obtenir un mouvement de la partie d'entraînement 7, notamment de la surface de la came 12, correspondant à un mouvement positif 59 dans la direction de l'organe à commander 17 et ensuite le courant dans le ou les phases du moteur pas à pas est coupé. Il est possible que le système actionné soit positionné à une position d'arrêt ou de départ bien définie, ou dans une position quelconque dans la zone morte. Le point de départ forme l'origine du système 0 dans cet exemple. Au moment de la coupure du courant dans les phases du moteur pas à pas, si la came de la partie d'entraînement est en contact avec l'organe à commander 17 et a comprimé l'élément élastique 21 lors de la rotation d'amplitude $x_1$, le moteur pas à pas est repoussé dans le sens inverse par la force élastique FE1 et une tension induite apparaît sur les phases du moteur pas à pas. Le système de commande 70 mesure la tension sur les phases du moteur pas à pas pour détecter si une tension induite a été générée. Dans le cas où la partie d'entraînement n'est pas encore en contact avec l'organe à commander ou que le jeu dans la chaîne d'entraînement n'est pas encore rattrapé, le rotor du moteur pas à pas n'est pas repoussé et aucune tension induite n'apparaît. Dans ce cas, le système de commande alimente le moteur pas à pas pour effectuer une rotation d'amplitude $y_1$ en sens opposé pour obtenir un mouvement de la partie d'entraînement en sens inverse du mouvement positif 59. La rotation d'amplitude $y_1$ est plus faible que la rotation d'amplitude $x_1$, pour obtenir un avancement relatif effectif de la partie d'entraînement dans la direction du mouvement positif. Le moteur pas à pas est à nouveau alimenté pour effectuer une deuxième rotation d'amplitude $x_2$ du moteur pas à pas, et de nouveau le système de commande vérifie si une tension induite a été détectée, et si cela n'est toujours pas le cas, le système de commande pilote le moteur pas à pas pour effectuer une rotation d'amplitude $y_2$. Le moteur pas à pas continue à faire des allers-retours $x_i$ respec-

tivement $y_i$ et la partie d'entraînement avance vers l'organe à commander jusqu'à la détection d'une tension induite sur le mouvement d'amplitude $x_n$. Le système de commande 70 mesure le signal induit, par exemple la tension induite, sur l'une ou plusieurs phases du moteur, et détermine en fonction du signal, le point Z1 de l'activation de l'organe à commander 17. Dans une variante, le système de commande 70 mesure le signal induit sur plusieurs phases du moteur et détermine l'angle a du recul du moteur pas à pas et ainsi le point de début Z1 de l'activation de l'organe à commander 17 avec plus de précision.

Dans une forme d'exécution, la rotation d'avancement d'amplitude $x_i$ peut avoir une valeur comprise entre un dixième de pas (1/10 pas) et deux pas et demi (2½ pas) de moteur pas à pas. Selon une variante, la rotation d'avancement d'amplitude $x_i$ peut avantageusement avoir une valeur comprise entre un quart de pas (¼ pas) et deux pas (2 pas) de moteur pas à pas, ou encore une valeur comprise entre un pas et sept quarts de pas (1 pas et 1¾ pas) de moteur pas à pas.

La rotation de recul d'amplitude $y_i$ peut avoir une valeur comprise entre 10% et 90% de la rotation d'avancement d'amplitude $x_i$. Selon une variante, la rotation de recul d'amplitude $y_i$ peut avantageusement avoir une valeur comprise entre 20% et 80% de la rotation d'avancement d'amplitude $x_i$, ou encore une valeur comprise entre 30% et 70% de la rotation d'avancement d'amplitude $x_i$.

Il n'y a pas nécessairement une équivalence entre les amplitudes $x_i$ et $x_{i+1}$ et en outre, il n'y a pas nécessairement une équivalence entre les amplitudes $y_i$ et $y_{i+1}$, bien que dans certaines formes d'exécution de l'invention l'amplitude d'avancement $x_i, x_{i+1}, \ldots x_n$ peut être de valeur constante et l'amplitude de recul $y_i, y_{i+1}, \ldots y_n$ peut aussi être de valeur constante. Les angles de rotation d'amplitude $x_i$ et $y_i$ peuvent êtres configurés selon les caractéristiques techniques du système d'actionnement, dont celles du moteur pas à pas, de sa partie d'entraînement, du système actionné et son élément élastique, et du système de commande, notamment la sensibilité de son circuit d'acquisition de la tension induite.

Dans le cadre de l'invention, le système de commande 70 peut être configuré pour mesurer d'autres paramètres électriques que la tension induite (p.ex. courant, phase, puissance) résultant de l'énergie induite par le recul du rotor du moteur pas à pas après la coupure du courant.

Faisant référence aux Figures 1, 2a et 2b, selon une forme d'exécution avec deux vannes hydrauliques proportionnelles 20 et 20', le procédé de détection de zone morte dans cet exemple spécifique démarre avec le moteur pas à pas M30 effectuant une rotation 53 d'amplitude x pour obtenir un mouvement de la surface de la came 12 en direction de la vanne hydraulique 20, correspondant à un mouvement d'avancement 59 et ensuite le courant dans les phases du moteur pas à pas est coupé. Au moment de la coupure du courant dans les phases du moteur pas à pas, si la came 12 est en contact avec le piston 17 et comprime l'élément élastique 21 lors de la rotation 53, le rotor du moteur pas à pas est repoussé dans le sens inverse par la force élastique FE1 et une tension induite apparaît sur les phases du moteur pas à pas M30. Le circuit d'acquisition F40 permet de capter le signal de tension induite et le microcontrôleur U1 permet de traiter le signal capté afin de déterminer la position du point Z1 correspondant au début de l'ouverture de la vanne hydraulique proportionnelle 20. Dans le cas où la came 12 n'est pas encore en contact avec le piston 17, le moteur pas à pas M30 n'est pas repoussé et aucune tension induite n'apparaît. Dans ce cas, le moteur pas à pas est à nouveau alimenté pour effectuer une rotation 55 en sens opposé d'amplitude y pour obtenir un mouvement de recul de la surface de la came dans le sens du mouvement négatif 61. L'angle de rotation 55 en sens opposé est plus faible que l'angle de la rotation 53. Le moteur pas à pas est à nouveau alimenté pour effectuer une deuxième rotation 53 d'avancement du rotor du moteur pas à pas d'angle égal à la précédente rotation 53, pour obtenir un avancement relatif en direction de mouvement positif 59 égal à la différence d'angle de rotation entre la rotation 53 d'avancement et la rotation 55 de recul du moteur pas à pas. Ce processus est répété jusqu'à ce qu'une tension induite soit détectée, et que le point de début Z1 de l'ouverture de la vanne hydraulique 20 soit déterminé.

Après détection du point Z1 le moteur pas à pas M30 est ensuite commandé en mouvement rapide 57 en sens négatif jusqu'à la position initiale que le moteur pas à pas occupait au début du procédé de détection de la zone morte. Le moteur pas à pas est ensuite commandé pour effectuer une rotation 53' pour obtenir un mouvement de la surface de la came 12 en direction de la vanne hydraulique 20', correspondant à un mouvement négatif 61 et ensuite le courant dans les phases du moteur est coupé. Au moment de la coupure du courant dans les phases du moteur, si la came 12 est en contact avec le piston 17' et a comprimé l'élément élastique 21' lors de la rotation 53', le rotor du moteur pas à pas est repoussé dans le sens inverse par la force élastique FE2 et une tension induite apparaît sur une ou plusieurs phases du moteur pas à pas M30. Le circuit d'acquisition F40 permet de capter le signal de tension induite et le microcontrôleur U1 permet de traiter le signal capté afin de déterminer la position du point Z2 correspondant au début de l'ouverture de la vanne hydraulique proportionnelle 20'. Dans le cas où la came 12 n'est pas encore en contact avec le piston 17', le moteur pas à pas M30 n'est pas repoussé et aucune tension induite n'apparaît. Dans ce cas, le moteur est à nouveau alimenté pour effectuer une rotation 55' en sens opposé pour obtenir un mouvement de la surface de la came en direction dans le sens du mouvement positif 61. L'angle de rotation 55' en sens opposé est plus faible que l'angle de rotation 53'. Le moteur est à nouveau alimenté pour effectuer une deuxième rotation 53' du moteur pas à pas d'angle égal à la précédente rotation 53', pour obtenir un avancement relatif en direction de mouvement négatif 61 égal à la différence d'angle de rotation entre la rotation 53' et la rotation 55' du rotor du moteur pas à pas. Ce processus est répété jusqu'à ce qu'une tension induite soit détectée, et que le point Z2 de début de l'ouverture de la vanne hydraulique 20' soit déterminé.

L'angle de rotation effectuée par le moteur pas à pas entre le point Z1 de l'ouverture de la vanne 20 et le point Z2 de l'ouverture de la vanne 20' est défini comme étant le jeu (zone morte) ZM du système d'actionnement 1. L'origine du système O du système d'actionnement est déterminée comme étant la moitié de l'angle de rotation à effectuer par le moteur pas à pas entre le point de début Z1 le point de début Z2. Le jeu ZM et l'origine du système O peut être stockés dans la mémoire du microcontrôleur U1. Le moteur pas à pas peut ensuite être positionné à l'origine du système O avec un mouvement rapide 57' correspondant.

Dans l'exemple illustré dans la Figure 2b, les mouvements de rotation d'avancement 53, 53' correspondent à 6/4 de pas du moteur pas à pas, et les mouvements de rotation de recul 55, 55' correspondent à 4/4 de pas du moteur pas à pas. Dans ce cas, le mouvement d'avancement relatif du rotor dans le sens du mouvement positif 59 ou mouvement négatif 61, correspond à 2/4 de pas du moteur pas à pas. Ce choix permet d'obtenir un signal de tension induite d'amplitude suffisante pour assurer une détection fiable des limites de la zone morte avec une bonne précision.

Selon une autre forme de l'invention (non illustré), la partie d'entraînement 7 peut comporter une pièce ou une portion élastique pour permettre la détection des limites du jeu lorsque l'organe à commander ne comprend pas de partie élastique. L'intérêt de cette forme d'exécution de l'invention est qu'elle permet la détection du jeu, sans que l'organe à commander nécessite un élément élastique, ou pour permettre d'éviter l'actionnement de l'organe à commander lors du procédé de détection du jeu. Dans ce dernier cas, la pièce ou la portion élastique de la partie d'entraînement 12 doit avoir une force élastique plus faible que la force élastique FE1 repoussant l'organe à commander.

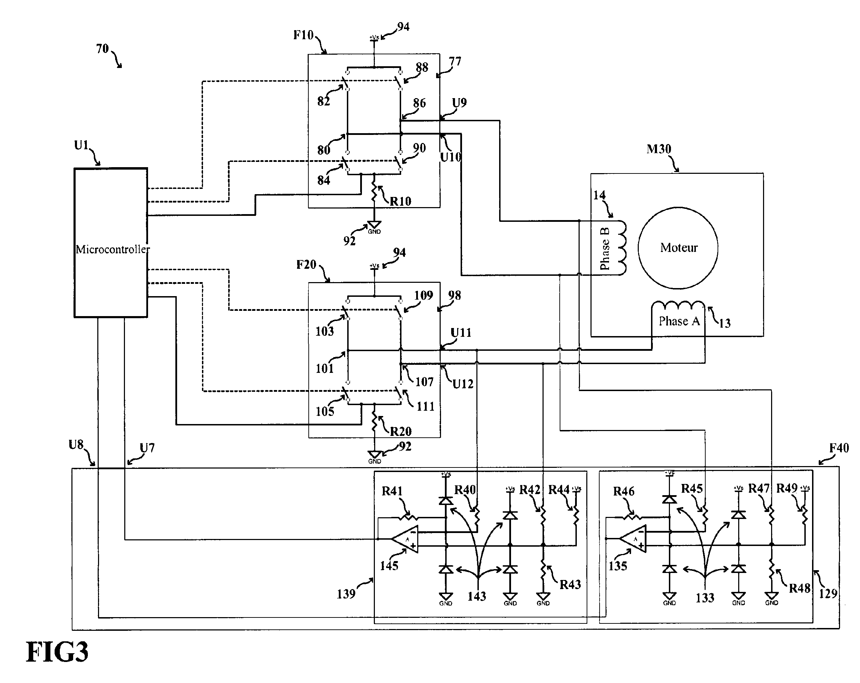

Faisant référence aux figures, notamment les Figures 1 et 3, selon une forme de l'invention avec un moteur à deux phases M30, comprenant un système de commande 70, le système de commande peut avantageusement comprendre un microcontrôleur U1, un premier circuit d'alimentation de la phase B du moteur pas à pas F10, et un deuxième circuit d'alimentation de la phase A du moteur pas à pas F20. Dans l'exemple illustré, le circuit d'alimentation de la phase B de moteur pas à pas F10 comprend un pont en H 77, et le circuit d'alimentation de la phase A du moteur pas à pas F20 comprend un pont en H 98, mais d'autres circuits d'alimentation en puissance connus en soi peuvent êtres employés. Le pont en H 77 peut comprendre quatre transistors de puissance 82, 84, 88, 90, avantageusement des transistors de type MosFet. Le pont en H 77 est connecté d'un côté à la masse 92 et de l'autre côté à l'alimentation 94. Le pont en H 98 peut comprendre quatre transistors de puissance 103, 105, 109, 111, avantageusement des transistors de type MosFet. Le pont en H 98 est connecté d'un côté à la masse 92 et de l'autre côté à l'alimentation 94. La configuration du pont en H des phases A et B du moteur pas à pas, permet un pilotage aisé du moteur pas à pas en permettant une inversion facile des polarités sur les phases du moteur, et un pilotage proportionnel du moteur pas à pas.

Faisant référence au système de commande 70 illustré dans la figure 3, le circuit d'acquisition F40 est un circuit d'acquisition de la tension induite et comprend un premier circuit phase B 129 et un deuxième circuit phase A 139. Le circuit phase B effectue une mesure différentielle de la tension induite sur la phase B 14 du moteur pas à pas M30 entre la borne 80 de phase B1 et la borne 86 de phase B2. Le circuit phase A effectue une mesure différentielle de la tension induite sur la phase A 13 du moteur pas à pas M30 entre la borne 101 de phase A1 et la borne 107 de phase A2. Le circuit phase B amplifie la mesure différentielle de la tension induite entre la borne de phase B1 et la borne de phase B2 au moyen d'un amplificateur différentiel 135 afin de fournir un signal de meilleure qualité au microcontrôleur U1. Le circuit phase A amplifie la mesure différentielle de la tension induite entre la borne de phase A1 et la borne de phase A2 au moyen d'un amplificateur différentiel 145 afin de fournir un signal de meilleure qualité au microcontrôleur U1. Faisant référence au circuit phase B 129, les diodes de protection de surtension 133 protègent les entrées de l'amplificateur différentiel 135 contre les surtensions venant du circuit d'alimentation d'une phase de moteur pas à pas F10 lors du pilotage du moteur pas à pas M30. Faisant référence au circuit phase A 139, les diodes de protection de surtension 143 protègent les entrées de l'amplificateur différentiel 145 contre les surtensions venant du circuit d'alimentation de la phase de moteur pas à pas F20 lors du pilotage du moteur pas à pas M30.

Les résistances des deux amplificateurs différentiels 135 et 145 peuvent avantageusement être fixées pour que R40 = R42 = R45 = R47, R41 = R43 = R46 = R48, *et R44* = R49 = ∞, pour définir un facteur d'amplification *g* égal au rapport R41 / R40, pour définir une tension à la borne U7 égale à *g* fois la différence de tension entre la borne U12 et la borne U11, et pour définir une tension à la borne U8 égale à *g* fois la différence de tension entre la borne U9 et la borne U10. Les résistances R44 et R49 peuvent avantageusement avoir une résistance qui est plus basse que l'infini ∞, créant ainsi un décalage du point 0 des amplificateurs différentiels et permettant ainsi une mesure dans une seule polarité quelle que soit la polarité de la tension induite.

Faisant référence aux Figures 3, 4, 5 et 7, selon une forme d'exécution de l'invention, la méthode d'acquisition de la tension à la borne U7 et de la tension à la borne U8 par le microcontrôleur U1 consiste à calculer l'angle électrique résultant et ainsi établir une valeur correspondant à l'angle de rotation dont le moteur pas à pas M30 a été repoussé. L'angle électrique θ e du moteur pas à pas est représenté par la formule :

$$\theta e = atan( U_{ind} \text{ phaseA} / U_{ind} \text{ Phase B})$$

où $U_{ind}$ représente la tension induite

L'angle mécanique $\theta m$ du moteur pas à pas est représenté par la formule :

$$\theta m = \theta e / Ne$$

où Ne représente le nombre de périodes électrique par tour du moteur

Une autre manière plus précise de calculer l'angle électrique $\theta e$ est représentée par la formule :

$$\theta e = sign( \omega e)^*(Ne/Kt) * \int sqrt (U_{ind} \text{ phaseA}^2 * U_{ind} \text{ phaseB}^2) \, dt$$

où

$\omega$ e représente la vitesse angulaire électrique des vecteurs de tensions induites, et

Kt représente le facteur de couple du moteur.

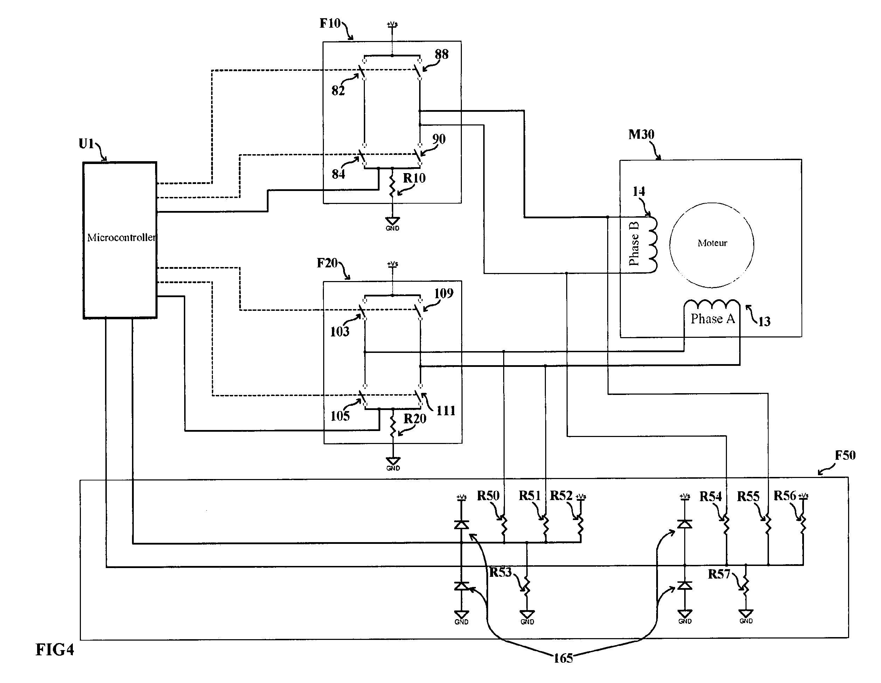

Faisant référence à la Figure 4, selon une variante, un circuit d'acquisition de la tension induite simplifié F50 comprend un ensemble de diodes de protection de surtension 165 et un ensemble de résistances R50 à R57 permettant de définir un rapport de mesure de la tension induite sur la phase A 13 et la phase B 14 du moteur pas à pas M30, et un décalage du point 0 pour pouvoir effectuer une mesure dans une seule polarité quelle que soit la polarité de la tension induite.

Une méthode de mesure consiste à couper six des huit transistors des circuits d'alimentation des phases du moteur pas à pas, et de maintenir un des deux transistors 84 ou 90 et un des deux transistors 105 ou 111 en conduction afin de déterminer le point de masse du signal de tension induite de chaque phase. Le choix des transistors qui sont maintenu en conduction est établi en fonction du sens souhaité de la tension induite.

Lorsque les résistances R50 = R51 = R54 = R55 et R52 = R53 =R56 = R57 les tensions mesurées ($U_{mes}$) sont les suivantes :

$$U_{mes}(\text{phase A}) = Vs/4 + U_{ind}(\text{phase A}) / 4$$

$$U_{mes}(\text{phase B}) = Vs/4 + U_{ind}(\text{phase B}) / 4$$

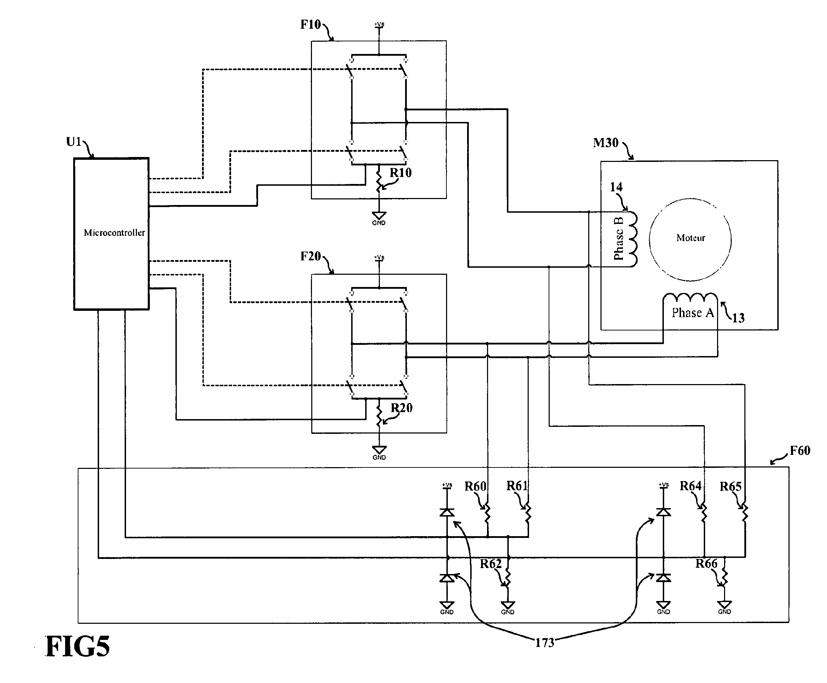

Faisant référence à la Figure 5, selon une autre variante, un circuit d'acquisition de la tension induite simplifié sans décalage du point 0 de la tension induite F60 comprend un ensemble de diodes de protection de surtension 173 et un ensemble de résistances permettant de définir un rapport de mesure de la tension induite sur la phase A 13 et la phase B 14 du moteur pas à pas M30.

Faisant référence aux Figures 3, 4 et 5, une autre méthode de mesure de la tension induite est basée sur une mesure unidirectionnelle par rapport à la masse. La méthode consiste à couper sept des huit transistors des circuits d'alimentation des phases de moteur pas à pas, et de maintenir un des transistors 84, 90, 105 ou 111 en conduction afin de déterminer le point de masse du signal de tension induite. Le choix du transistor 84, 90, 105 ou 111 1 qui est maintenu en conduction est établi en fonction de l'état des courants de phase avant la coupure de ceux-ci. Ceci a pour effet de définir sur quelle phase du moteur et sur quelle polarité la tension induite est mesurée. Le choix de la phase du moteur pas à pas sur laquelle la mesure est effectuée est fait pour obtenir une tension induite d'amplitude maximale quand le moteur pas à pas est repoussé sous l'effet de l'élément élastique comprimé. La détection de la tension induite par le recul du moteur pas à pas est basée sur le dépassement d'une amplitude prédéfinie.

Une autre méthode consiste à échantillonner la tension induite sur une phase du moteur et d'additionner les valeurs mesurées, et de former ainsi l'intégrale de la tension induite, ce qui représente l'angle dont le moteur pas à pas a été repoussé.

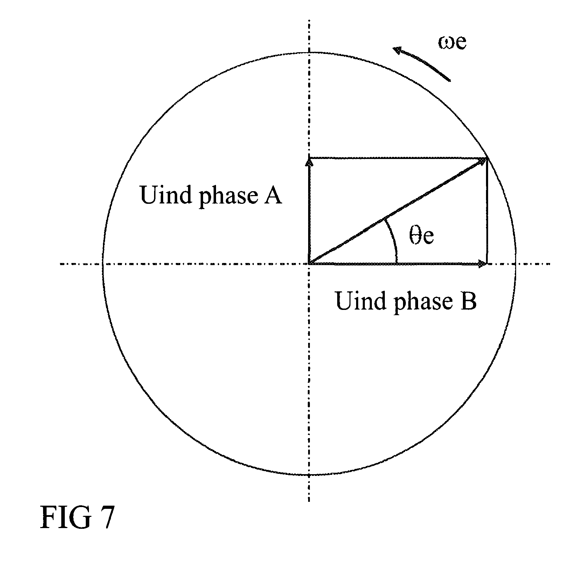

Faisant référence à la Figure 3 et 7, et selon une autre forme de l'invention, une autre méthode de détection du jeu de la chaîne d'entraînement du système d'actionnement comprend une mesure du déphasage entre la phase A et la phase B du moteur pas à pas M30, au moyen d'un circuit de détection de déphasage F70 entre la phase A 13 et la phase B 14 du moteur pas à pas.

## Revendications

1.   Procédé de commande d'un système d'actionnement pour la détection du jeu mécanique, le système d'actionnement incluant
un système de commande (70),
un actionneur (3) comprenant une partie d'entraînement et un moteur pas à pas (M30) comportant un rotor et un stator avec au moins une phase électrique,
un système actionné (15) comprenant un organe à commander (17) couplé à la partie d'entraînement, et
une partie élastique (21) générant une force de retour élastique sur le rotor du moteur ou sur la partie d'entraînement, le procédé de détection de jeu mécanique comprenant les étapes de :

a) déplacement du rotor d'une amplitude prédéterminée $x_i$ dans un sens visant un déplacement de l'organe à commander ;
b) coupure du courant de ladite au moins une phase du stator ;
c) mesure d'un paramètre électrique induit sur ladite au moins une phase du stator générée, et lorsque la valeur du paramètre électrique signale que le rotor n'a effectué aucun retour ou un retour inférieur à un seuil prédéterminé
d) optionnellement, déplacement du rotor d'une amplitude $y_i$ dans un sens opposé au sens visant un déplacement de l'organe à commander, où $x_i > y_i$,
e) et répétition des étapes (a), (b), (c) et optionnellement (d) jusqu'à la détection d'un paramètre électrique induit correspondant à un retour du rotor résultant de la force de retour élastique lorsque le jeu mécanique est rattrapé.

2.   Procédé de commande d'un système d'actionnement selon la revendication 1, **caractérisée en ce que** le stator a au moins deux phases électriques et la mesure du paramètre électrique induit comprend une mesure différentielle du paramètre électrique entre lesdites au moins deux phases.

3.   Procédé de commande d'un système d'actionnement selon la revendication précédente, **caractérisée en ce que** l'on détermine de la mesure différentielle du paramètre électrique l'angle de rotation de retour du rotor.

4.   Procédé de commande d'un système d'actionnement selon la revendication 1, **caractérisée en ce que** la mesure du paramètre électrique induit comprend une mesure du paramètre électrique induit de ladite au moins une phase par rapport à un paramètre de référence.

5.   Procédé de commande d'un système d'actionnement selon l'une quelconque des revendication précédentes, **caractérisée en ce que** le paramètre électrique induit mesuré est une tension induite.

6.   Procédé de commande d'un système d'actionnement selon l'une quelconque des revendication précédentes, **caractérisée en ce que** l'amplitude $y_i$ de déplacement du rotor dans le sens opposé est comprise entre 10 et 90% de l'amplitude $x_i$ de déplacement du rotor dans le sens visant un déplacement de l'organe à commander.

7.   Procédé de commande d'un système d'actionnement selon la revendication précédente, **caractérisée en ce que** l'amplitude $y_i$ de déplacement du rotor dans le sens opposé est comprise entre 30 et 70% de l'amplitude $x_i$ de déplacement du rotor dans le sens visant un déplacement de l'organe à commander.

8.   Procédé de commande d'un système d'actionnement selon l'une quelconque des revendication précédentes, **caractérisée en ce que** l'amplitude $x_i$ de déplacement du rotor dans le sens visant un déplacement de l'organe à commander a une valeur comprise entre un dixième de pas (1/10 pas) et deux pas et demi (2½ pas) du moteur pas à pas.

9.   Procédé de commande d'un système d'actionnement selon la revendication précédente, **caractérisée en ce que** l'amplitude $x_i$ de déplacement du rotor dans le sens visant un déplacement de l'organe à commander a une valeur comprise entre un quart de pas (¼ pas) et deux pas (2 pas) du moteur pas à pas.

10. Procédé de commande d'un système d'actionnement selon la revendication précédente, **caractérisée en ce que** l'amplitude $x_i$ de déplacement du rotor dans le sens visant un déplacement de l'organe à commander a une valeur comprise entre trois quarts de pas (¾ pas) et sept quarts de pas du moteur pas à pas.

11. Système d'actionnement incluant un système de commande (70), un actionneur (3) comprenant une partie d'entraînement et un moteur pas à pas (M30) comportant un rotor et un stator avec au moins une phase électrique, un système actionné (15) comprenant un organe à commander (17) couplé à la partie d'entraînement, et une partie élastique (21) pouvant générer une force de retour élastique sur le rotor du moteur ou sur la partie d'entraînement, **caractérisé en ce que** le système de commande comprend des moyens pour mesurer un paramètre électrique induit sur ladite au moins une phase du stator après coupure du courant de ladite au moins une phase du stator afin de détecter un retour du rotor résultant de la force de retour élastique lorsqu'un jeu mécanique est rattrapé.

12. Système d'actionnement selon la revendication précédente, **caractérisé en ce que** le système de commande comprend un microcontrôleur (U1), un circuit d'alimentation (F10, F20) de ladite au moins une phase de moteur pas à pas, et un circuit d'acquisition (F40) de paramètre électrique induit.

13. Système d'actionnement selon l'une des revendications 11 à 12, **caractérisé en ce que** le système de commande comprend un circuit d'acquisition (F40) comprenant un amplificateur différentiel (135, 145) connecté aux bornes de ladite au moins une phase.

14. Système d'actionnement selon la revendication précédente, **caractérisé en ce que** le circuit d'acquisition comprend des diodes de protection de surtension (133, 143) protègent les entrées de l'amplificateur différentiel contre les surtensions venant d'un circuit d'alimentation de ladite phase de moteur pas à pas lors du pilotage du moteur pas à pas.

15. Système d'actionnement selon l'une des revendications 11 à 14, **caractérisé en ce que** le circuit d'acquisition comprend un ensemble de résistances permettant de définir un rapport de mesure de la tension induite sur ladite au moins une phase, et un décalage du point 0 pour pouvoir effectuer une mesure dans une seule polarité quelle que soit la polarité de la tension induite.

16. Système d'actionnement selon l'une des revendications 11 à 15, **caractérisé en ce que** le système d'actionnement est une commande hydraulique, le système actionné étant un dispositif de vanne hydraulique et l'organe à commander un piston de vanne.

17. Système d'actionnement selon l'une des revendications 11 à 16, **caractérisé en ce que** le système de commande est configuré pour effectuer le procédé selon l'une des revendications 1 à 10.

**Claims**

1. A method for controlling an actuation system for detection of mechanical play, the actuation system including a control system (70),
an actuator (3) comprising a driving portion and a step motor (M30) including a rotor and a stator with at least one electric phase,
an actuated system (15) comprising a unit to be controlled (17) coupled with the driving portion, and
an elastic portion (21) generating an elastic return force on the rotor of the motor or on the driving portion,
the mechanical play detection method comprising the steps of:

a) displacing the rotor by a predetermined amplitude $x_i$ in a direction aiming at displacing the unit to be controlled;
b) cutting the current of said at least one phase of the stator;
c) measuring an electric parameter induced on said at least one generated phase of the stator, and when the value of the electric parameter indicates that the rotor has achieved no return or a return below a predetermined threshold,
d) optionally, displacing the rotor by an amplitude $y_i$ in a direction opposite to the direction aiming at a displacement of the unit to be controlled, wherein $x_i > y_i$,
e) and repeating the steps (a), (b), (c) and optionally (d) until detection of an induced electric parameter corresponding to a return of the rotor resulting from the elastic return force when the mechanical play is caught up.

2. The method for controlling an actuation system according to claim 1, **characterized in that** the stator has at least two electric phases and the measurement of the induced electric parameter comprises a differential measurement of the electric parameter between said at least two phases.

3. The method for controlling an actuation system according to the preceding claim, **characterized in that** the return rotation angle of the rotor is determined from the differential measurement of the electric parameter.

4. The method for controlling an actuation system according to claim 1, **characterized in that** the measurement of the induced electric parameter comprises a measurement of the induced electric parameter of said at least one phase relatively to a reference parameter.

5. The method for controlling an actuation system according to any of the preceding claims, **characterized in that** the measured induced electric parameter is an induced voltage.

6. The method for controlling an actuation system according to any of the preceding claims, **characterized in that** the displacement amplitude $y_i$ of the rotor in the opposite direction is comprised between and including 10 and 90% of the displacement amplitude $x_i$ of the rotor in the direction aiming at a displacement of the unit to be controlled.

7. The method for controlling an actuation system according to the preceding claim, **characterized in that** the displacement amplitude $y_i$ of the rotor in the opposite direction is comprised between and including 30 and 70% of the displacement amplitude $x_i$ of the rotor in the direction aiming at a displacement of the unit to be controlled.

8. The method for controlling an actuation system according to any of the preceding claims, **characterized in that** the displacement amplitude $x_i$ of the rotor in the direction aiming at a displacement of the unit to be controlled has a value comprised between and including one tenth of a step (1/10 step) and two and a half steps (2 ½ steps) of the step motor.

9. The method for controlling an actuation system according to the preceding claim, **characterized in that** the displacement amplitude $x_i$ of the rotor in the direction aiming at a displacement of the unit to be controlled has a value comprised between and including one quarter of a step (1/4 step) and two steps (2 steps) of the step motor.

10. The method for controlling an actuation system according to the preceding claim, **characterized in that** the displacement amplitude $x_i$ of the rotor in the direction aiming at a displacement of the unit to be controlled has a value comprised between and including three quarters of a step (3/4 step) and seven quarters of a step of the step motor.

11. An actuation system including a control system (70), an actuator (3) comprising a driving portion and a step motor (M30) including a rotor and a stator with at least one electric phase, an actuated system (15) comprising a unit to be controlled (17) coupled with the driving portion, and an elastic portion (21) able to generate an elastic return force on the rotor of the motor or on the driving portion, **characterized in that** the control system comprises means for measuring an electric parameter induced on said at least one phase of the stator after cutting the current of said at least one phase of the stator in order to detect a return of the rotor resulting from the elastic return force when a mechanical play is caught up.

12. The actuation system according to the preceding claim, **characterized in that** the control system comprises a microcontroller (U1), a circuit for powering (F10, F20) said at least one step motor phase, and an induced electric parameter acquisition circuit (F40).

13. The actuation system according to one of claims 11 to 12, **characterized in that** the control system comprises an acquisition circuit (F40) comprising a differential amplifier (135, 145) connected to the terminals of said at least one phase.

14. The actuation system according to the preceding claim, **characterized in that** the acquisition circuit comprises overvoltage protection diodes (133, 143) protecting the inputs of the differential amplifier against overvoltages from a circuit for powering said step motor phase during the driving of the step motor.

15. The actuation system according to one of claims 11 to 14, **characterized in that** the acquisition circuit comprises a set of resistors, with which it is possible to define a measurement ratio of the voltage induced on said at least one phase, and a shift of the 0 point in order to be able to carry out a measurement in a single polarity regardless of the polarity of the induced voltage.

16. The actuation system according to one of claims 11 to 15, **characterized in that** the actuation system is a hydraulic control, the actuated system being a hydraulic valve device and the unit to be controlled, a valve piston.

17. The actuation system according to one of claims 11 to 16, **characterized in that** the control system is configured in order to carry out the method according to one of claims 1 to 10.

**Patentansprüche**

1. Steuerungsverfahren eines Betätigungssystems zur Feststellung des mechanischen Spiels, wobei das Betätigungssystem umfasst:

   ein Steuerungssystem (70),
   einen Aktuator (3), der einen Antriebsabschnitt und einen Schrittmotor (M30), der einen Rotor und einen Stator mit mindestens einer elektrischen Phase aufweist, umfasst,
   ein betätigtes System (15), das ein zu steuerndes Organ (17) umfasst, das mit dem Antriebsabschnitt verbunden ist, und
   einen elastischen Abschnitt (21), der auf den Rotor des Motors oder auf den Antriebsabschnitt eine elastische Rückholkraft ausübt,
   wobei das Verfahren zur Feststellung des mechanischen Spiels die Schritte umfasst:

   a) Verlagern des Rotors um eine vorbestimmte Amplitude $x_i$ in eine Richtung, die auf eine Verlagerung des zu steuernden Organs abzielt,
   b) Trennen der mindestens einen Phase des Stators vom Strom,
   c) Messen eines auf die mindestens eine generierte Phase des Stators induzierten elektrischen Parameters, und wenn der Wert des elektrischen Parameters signalisiert, dass der Rotor nicht zurückgekehrt ist oder unterhalb eines vorbestimmten Grenzwerts zurückgekehrt ist,
   d) optional, Verlagern des Rotors um eine Amplitude $y_i$ in eine Richtung entgegengesetzt zu der Richtung, die auf eine Verlagerung des zu steuernden Organs abzielt, wobei $x_i > y_i$,
   e) und Wiederholung der Schritte (a), (b), (c) und optional (d) bis zur Feststellung eines induzierten elektrischen Parameters, der einer Rückkehr des Rotors entspricht, der aus der elastischen Rückholkraft resultiert, wenn das mechanische Spiel beseitigt ist.

2. Steuerungsverfahren eines Betätigungssystems nach Anspruch 1, **dadurch gekennzeichnet, dass** der Stator mindestens zwei elektrische Phasen hat und die Messung des induzierten elektrischen Parameters eine Differentialmessung des elektrischen Parameters zwischen den mindestens zwei Phasen umfasst.

3. Steuerungsverfahren eines Betätigungssystems nach vorangehendem Anspruch, **dadurch gekennzeichnet, dass** aus der Differentialmessung des elektrischen Parameters der Rotationswinkel der Rückkehr des Rotors abgeleitet wird.

4. Steuerungsverfahren eines Betätigungssystems nach Anspruch 1, **dadurch gekennzeichnet, dass** die Messung des induzierten elektrischen Parameters eine Messung des induzierten elektrischen Parameters der mindestens einen Phase im Verhältnis zu einem Referenzparameter umfasst.

5. Steuerungsverfahren eines Betätigungssystems nach einem der vorangehenden Ansprüche, **dadurch gekennzeichnet, dass** der gemessene induzierte elektrische Parameter eine induzierte Spannung ist.

6. Steuerungsverfahren eines Betätigungssystems nach einem der vorangehenden Ansprüche, **dadurch gekennzeichnet, dass** die Amplitude $y_i$ der Verlagerung des Rotors in die entgegengesetzte Richtung zwischen und inklusive 10 und 90 % der Amplitude $x_i$ der Verlagerung des Rotors in die Richtung ist, die auf eine Verlagerung des zu steuernden Organs abzielt.

7. Steuerungsverfahren eines Betätigungssystems nach vorangehendem Anspruch, **dadurch gekennzeichnet, dass**

die Amplitude $y_i$ der Verlagerung des Rotors in die entgegengesetzte Richtung zwischen und inklusive 30 und 70 % der Amplitude $x_i$ der Verlagerung des Rotors in die Richtung ist, die auf eine Verlagerung des zu steuernden Organs abzielt.

8. Steuerungsverfahren eines Betätigungssystems nach einem der vorangehenden Ansprüche, **dadurch gekennzeichnet, dass** die Amplitude $x_i$ der Verlagerung des Rotors in die Richtung, die auf eine Verlagerung des zu steuernden Organs abzielt, einen Wert hat, der zwischen und inklusive einem Zehntel eines Schritts (1/10 Schritt) und zweieinhalb Schritten (2½ Schritten) des Schrittmotors ist.

9. Steuerungsverfahren eines Betätigungssystems nach vorangehendem Anspruch, **dadurch gekennzeichnet, dass** die Amplitude $x_i$ der Verlagerung des Rotors in die Richtung, die auf eine Verlagerung des zu steuernden Organs abzielt, einen Wert hat, der zwischen und inklusive einem Viertel eines Schritts (1/4 Schritt) und zwei Schritten (2 Schritte) des Schrittmotors ist.

10. Steuerungsverfahren eines Betätigungssystems nach vorangehendem Anspruch, **dadurch gekennzeichnet, dass** die Amplitude $x_i$ der Verlagerung des Rotors in die Richtung, die auf eine Verlagerung des zu steuernden Organs abzielt, einen Wert hat, der zwischen und inklusive drei Vierteln eines Schritts (3/4 Schritt) und sieben Schrittvierteln des Schrittmotors ist.

11. Betätigungssystem, das ein Steuerungssystem (70), einen Aktuator (3), der einen Antriebsabschnitt und einen Schrittmotor (M30) umfasst, der einen Rotor und einen Stator mit mindestens einer elektrischen Phase aufweist, ein betätigtes System (15), das ein zu steuerndes Organ (17) umfasst, das mit dem Antriebsabschnitt verbunden ist, und einen elastischen Abschnitt (21), der eine elastische Rückholkraft auf den Rotor des Motors oder auf den Antriebsabschnitt ausüben kann, umfasst, **dadurch gekennzeichnet, dass** das Steuerungssystem Mittel zur Messung eines auf die mindestens eine Phase des Stators nach Unterbrechung des Stroms der mindestens einen Phase des Stators induzierten elektrischen Parameter umfasst, um eine Rückkehr des Rotors feststellen zu können, die aus der elastischen Rückholkraft resultiert, wenn ein mechanisches Spiel beseitigt wird.

12. Betätigungssystem nach vorangehendem Anspruch, **dadurch gekennzeichnet, dass** das Steuerungssystem einen Mikrocontroller (U1), einen Versorgungskreis (F10, F20) der mindestens einen Schrittmotorphase und einen Erfassungskreis (F40) des induzierten elektrischen Parameters umfasst.

13. Betätigungssystem nach einem der Ansprüche 11 bis 12, **dadurch gekennzeichnet, dass** das Steuerungssystem einen Erfassungskreis (F40) umfasst, der einen Differentialverstärker (135, 145) umfasst, der mit den Klemmen der mindestens einen Phase verbunden ist.

14. Betätigungssystem nach vorangehendem Anspruch, **dadurch gekennzeichnet, dass** der Erfassungskreis Überspannungsschutzdioden (133, 143) umfasst, die die Eingänge des Differentialverstärkers vor Überspannungen schützen, die von einem Versorgungskreis der Schrittmotorphase während der Steuerung des Schrittmotors kommen.

15. Betätigungssystem nach einem der Ansprüche 11 bis 14, **dadurch gekennzeichnet, dass** der Erfassungskreis eine Gruppe von Widerständen umfasst, die es erlauben, ein Verhältnis der Messung der auf mindestens eine Phase induzierten Spannung und eine Verlagerung vom Punkt 0 zur Durchführung einer Messung in einer einzigen Polarität, unabhängig von der Polarität der induzierten Spannung, zu definieren.

16. Betätigungssystem nach einem der Ansprüche 11 bis 15, **dadurch gekennzeichnet, dass** das Betätigungssystem eine hydraulische Steuerung ist, wobei das betätigte System eine hydraulische Ventilvorrichtung und das zu steuernde Organ ein Ventilkolben ist.

17. Betätigungssystem nach einem der Ansprüche 11 bis 16, **dadurch gekennzeichnet, dass** das Steuerungssystem für die Durchführung des Verfahrens nach einem der Ansprüche 1 bis 10 konfiguriert ist.

FIG 1

FIG 2a

FIG 2b

EP 2 363 950 B1

FIG3

FIG4

EP 2 363 950 B1

FIG5

EP 2 363 950 B1

Tension induite

Echantillonnage

FIG 6

EP 2 363 950 B1

FIG 7